# EUROPÄISCHE PATENTSCHRIFT

(11) **EP 1 238 868 B1**
(45) Veröffentlichungstag und Bekanntmachung des Hinweises auf die Patenterteilung: **22.09.2004**
(21) Anmeldenummer: 02003275.1
(22) Anmeldetag: 22.02.2002
(51) Int. Cl.: B60R 21/20

(54) **Fahrzeuglenkrad**
Vehicle steering wheel
Volant de véhicule

(30) Priorität: 06.03.2001 DE 20103891 U
(43) Veröffentlichungstag der Anmeldung: 11.09.2002
(73) Patentinhaber: TRW Automotive Safety Systems GmbH, 63743 Aschaffenburg (DE)
(72) Erfinder: Schütz, Dominik, 63857 Waldaschaff (DE)
(74) Vertreter: Kitzhofer, Thomas, Dipl.-Ing.

(56) Entgegenhaltungen:
- EP-A- 0 717 122
- EP-A- 0 945 310
- EP-A- 1 043 198
- DE-A- 19 852 003
- DE-U- 20 103 890

## Beschreibung

Die Erfindung betrifft ein Fahrzeuglenkrad, gemäß dem Oberbegriff des Anspruchs 1.

Vorzugsweise betrifft die Erfindung ein Fahrzeuglenkrad mit einem axial zur Hupenbetätigung verschiebbar gelagerten Gassackmodul, das von der Abdeckkappe verschlossen ist.

Zum Betätigen der Hupe wird die Abdeckkappe und gegebenenfalls das gesamte Modul axial, das heißt in der Richtung der Lenkwelle, verschoben, bis die Hupenkontakte geschlossen sind. Zwischen der Abdeckkappe und der sie umgebenden Umschäumung ist ein Spalt vorgesehen, welcher möglichst gering und gleichmäßig sein sollte. Beim Drücken der Abdeckkappe sollte darüber hinaus der Spalt nicht komplett verschwinden, denn ansonsten würde die Abdeckkappe an der Umschäumung anliegen, und die entstehende Reibung würde die Hupenbetätigung erschweren.

In der Gattungsgemäßen EP-A-0 945 310 wird die Abdeckkappe über randseitige Führungen auf fest im Lenkrad verankerte Bolzen aufgesteckt. Beim Niederdrücken der Abdeckkappe zur Betätigung der Hupe gleiten die Führungen auf den Bolzen.

Bei dem in der EP-A-1 043 198 gezeigten Lenkrad wird eine Kippbewegung des Gassackmoduls zur Betätigung der Hupe zugelassen. Hierzu sind am Boden des Gassackmoduls nahe der Lenkradachse Bolzen befestigt, die mit Spiel in Ausnehmungen in der Umschäumung des Lenkradskeletts gelagert sind, so daß sie sich relativ zur Umschäumung bewegen können. Aufgabe der Erfindung ist es deshalb, ein Fahrzeuglenkrad zu schaffen, bei dem der Spalt klein und auf dem Umfang konstant gehalten wird. Darüber hinaus sollen für die Lagerung der Abdeckkappe und gegebenenfalls des Gassackmoduls möglichst wenig Teile verwendet werden.

Die Aufgabe wird bei einem Fahrzeuglenkrad der eingangs genannten Art durch die Merkmale des Anspruchs 1 gelöst. Durch die Kippbewegung wird ein Klemmen der Führungen verhindert. Durch die Führung allein wird also die Bewegung der Abdeckkappe bei der Hupenbetätigung nicht erlaubt, sondern zusätzlich noch durch das Ermöglichen der Kippbewegung im nachgiebigen Schaum. Es handelt sich also bewußt um eine nachgiebige Lagerung der Führung in der Umschäumung. Dadurch, daß die Lagerungen am Rand der Abdeckkappe angeordnet sind, ergibt sich bei der Betätigung eine Schwenkachse, die ganz nahe am Rand der Abdeckkappe liegt, wodurch sich seitliche Verschiebungen bei der axialen Verlagerung der Abdeckkappe kaum noch ergeben können. Im Stand der Technik wird die Abdeckkappe oder das Gassackmodul nahe ihrer Mitte rückseitig gelagert, das heißt die Lagerung ist radial vom Rand der Abdeckkappe stark versetzt, wodurch ein Kippen der Abdeckkappe oder des gesamten Moduls bei der Hupenbetätigung erreicht wird, was mit einer seitlichen Verlagerung der Abdeckkappe oder des Moduls verbunden ist.

Gemäß der bevorzugten Ausführungsform, bei der die Abdeckkappe das Gassackmodul schließt, ist das Gassackmodul mit den Führungen nahe am Rand der Abdeckkappe verbunden und zusammen mit der Abdeckkappe axial verschiebbar.

Das Gassackmodul hat vorzugsweise ein zur Abdeckkappe offenes topfförmiges Aufnahmegehäuse zur Aufnahme eines Gassacks. Der Rand des Gehäuses hat seitlich nach außen zum Rand der Abdeckkappe ragende Fortsätze, an denen die Führungen angreifen. Durch diese Fortsätze wird die Positionierung der Führungen unmittelbar am Spalt erreicht.

Die Führungen sind beispielsweise einstückig an dem Aufnahmegehäuse angeformte Bolzen. Wenn das Aufnahmegehäuse aus Kunststoff ist, können auch die Führungen auf einfache Weise daran angeformt sein. Wenn die Bolzen als Führungen ausgebildet werden, dienen sie auch der Führung von Rückstellfedern, indem sie sich durch diese erstrecken. Die Rückstellfedern wiederum dienen zur Rückstellung der Abdeckkappe oder des gesamten Gassackmoduls.

Die Führungen können in Lagerbuchsen aufgenommen sein, wobei die Lagerbuchsen axial nicht abziehbar an den durch Bolzen gebildeten Führungen gelagert und in die Umschäumung eingedrückt sind. Indem die Lagerbuchsen axial nicht abziehbar an den Bolzen gehaltert sind, kann das gesamte Gassackmodul samt der Lagerbuchsen als vormontierte Einheit ausgebildet sein und am Lenkrad dadurch montiert werden, daß beim Aufsetzen des Moduls die Lagerbuchsen in entsprechende Aufnehmungen in der Umschäumung einfach eingedrückt werden.

Eine Rastverbindung zwischen Skelett und Gassackmodul dient der Halterung des Moduls insofern, als die Rastverbindung ein Herausnehmen des Moduls aus dem Lenkrad durch Unbefugte verhindert. Die Rastverbindung dient vorzugsweise auch der Schaffung eines axialen Anschlags in der Ausgangsstellung des Gassackmoduls, das heißt bei nichtbetätigter Hupe.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Schnittansicht durch das erfindungsgemäße Lenkrad gemäß einer bevorzugten Ausführungsform bei nichtbetätigter Hupe,
- Figur 2 das Fahrzeuglenkrad nach Figur 1 bei betätigter Hupe,
- Figur 3 eine Ansicht des Gassackm oduls von unten, wobei die Speichen des Lenkrades angedeutet sind,
- die Figuren 4a und 4b ein Nachgeben, d.h. Kippen der Lagerung in verschiedene Richtungen, und
- Figur 5 die Abdeckkappe samt Führung vor dem Einsetzen in die Umschäumung.

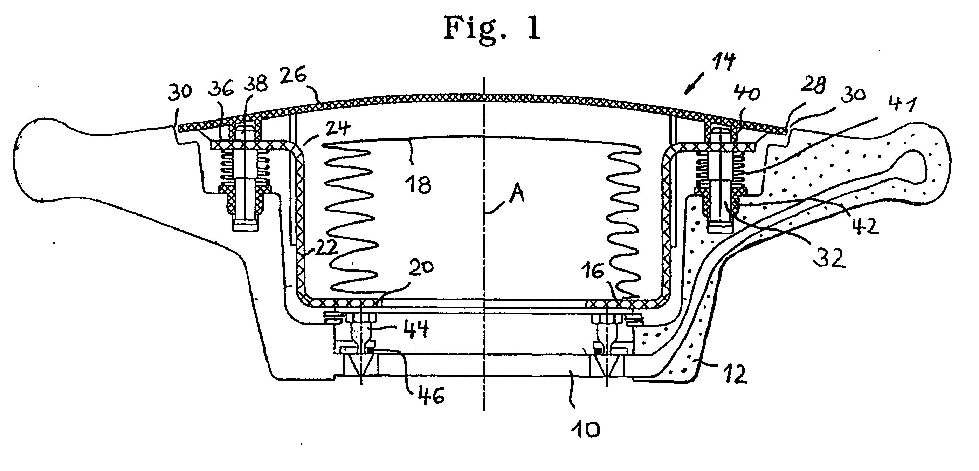

In Figur 1 ist ein Fahrzeuglenkrad dargestellt, das ein Lenkradskelett 10 aus Druckgußmaterial und eine Umschäumung 12 des Skeletts sowie ein Gassackmodul 14 aufweist. Das Skelett 10 und die Umschäumung 12 sind nur in der rechten Hälfte geschnitten dargestellt.

Das Gassackmodul weist ein nach oben offenes topfförmiges Aufnahmegehäuse 16 aus Kunststoff auf, in dem ein Gassack 18 aufgenommen ist. Das Aufnahmegehäuse 16 hat einen Boden 20 und eine umlaufende Seitenwand 22 mit einem oberen Rand 24. Das Aufnahmegehäuse 16 ist durch eine Abdeckkappe 26 geschlosssen, die beim Entfalten des Gassacks 18 aufreißt und eine Austrittsöffnung freigibt. Die großflächige Abdeckkappe 26 hat einen äußeren Rand 28, an den sich in dem in Figur 1 gezeigten Zustand absatzlos, nur durch einen schmalen Spalt 30 getrennt, die Umschäumung 12 anschließt. Die Abdeckkappe 26 deckt das Modul vorderseitig komplett ab.

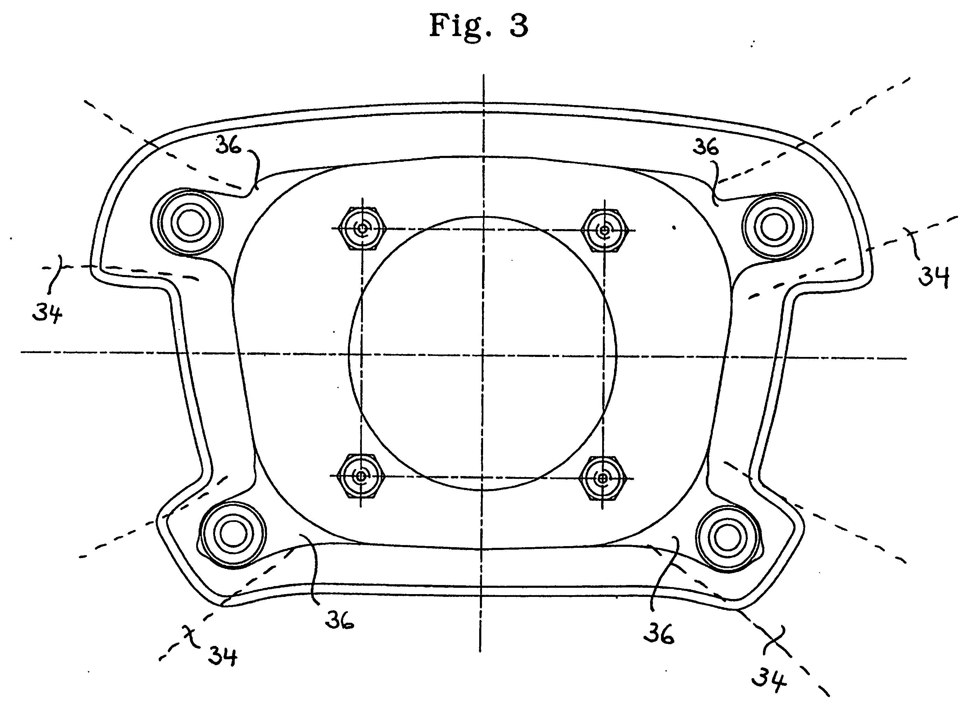

Unmittelbar am Rand 28 angrenzend sind, wie Figur 3 zeigt, Führungen in Form von Bolzen 32 für die Abdeckkappe 26 und das Modul 14 vorgesehen. An jeder Speiche 34 liegt dabei eine Führung 32.

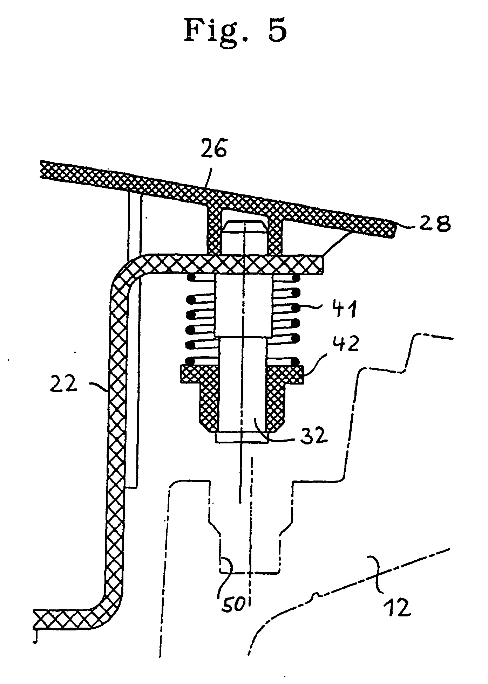

Die Führungen 32 sind aus Kunststoff und einstückig am Aufnahmegehäuse 16 angeformt, wobei das Aufnahmegehäuse, wie in Figur 3 zu sehen, am Rand 24 seitlich nach außen, zum Rand 28 der Abdeckkappe 26 ragende Fortsätze 36 hat. Die Führungen 32 haben jeweils einen nach oben gerichteten Ansatz 38, der in eine Aufnahme 40 an der Rückseite der Abdeckkappe 26 ragt, in der die Führung ohne seitliches Spiel aufgenommen ist. Die einzelnen Führungen 32 sind aber nicht unmittelbar miteinander verbunden. Die Abdeckkappe 26 ist im übrigen über nicht gezeigte Stege mit dem Aufnahmegehäuse 16 fest verbunden. Jede Führung 32 weist einen längeren Schaftabschnitt auf, der nach unten ragt und sich durch eine Rückstellfeder 41 erstreckt. Eine Lagerbuchse 42 mit einem der Anlage der Rückstellfeder 41 dienenden Bund ist auf jede Führung 32 von unten aufgeschoben. Das freie Ende jeder Führung ist verdickt, um ein Abziehen der Lagerbuchsen 42 nach dem Abstecken zu verhindern. Das Gassackmodul 14 wird deshalb zusammen mit den Führungen 32 und den Lagerbuchsen 42 bei der Montage von oben auf das Skelett 10 samt Umschäumung 12 gesetzt (Figur 5), bis die Lagerbuchsen 42 in entsprechende Ausnehmungen 50 in der Umschäumung eingedrückt sind. Somit werden die Führungen 32 in der Umschäumung 12 nachgiebig gelagert, und zwar nicht nur axial nachgiebig, sondern auch radial nachgiebig, so daß die Führungen 32 samt Lagerbuchsen 42 in der Umschäumung 12 bei seitlichem Druck auf die Abdeckkappe kippen.

Rückseitig am Boden 20 sind Haken 44 als Teil einer Rastverbindung vorgesehen. Zu jeder Rastverbindung gehört noch ein nachgiebiges, mit dem Skelett 10 verbundenes Rastteil 46, welches eine Hinterschneidung am Haken 44 hintergreift. Die Rastverbindung ist so ausgebildet, daß das Rastteil 46 samt Rasthaken 44 in der in Figur 1 gezeigten Ausgangsstellung den Anschlag für das Gassackmodul 14 bildet, wobei aber in Richtung der Achse A und nach unten eine Verschiebung innerhalb der Rastverbindung möglich ist, um die Hupenbetätigung zu erlauben.

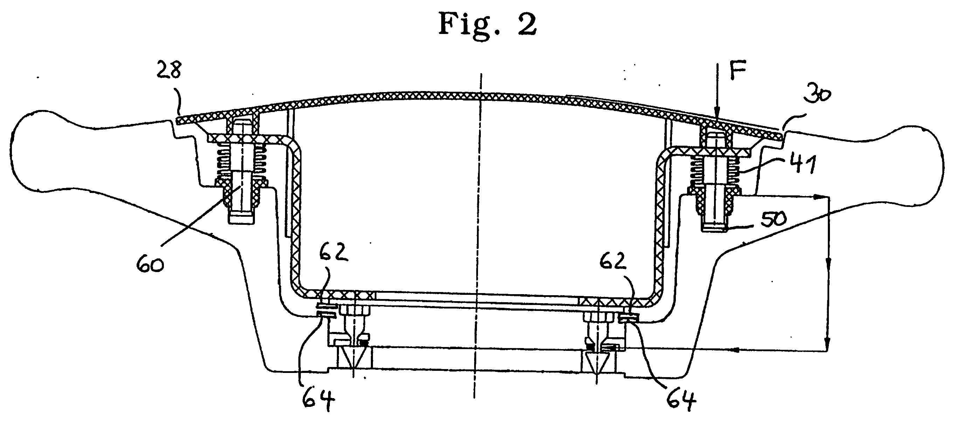

Wenn, wie in Figur 2 gezeigt, beispielsweise im Bereich des Randes 28 über den Daumen des Fahrers ein Druck von oben in Pfeilrichtung aufgebracht wird, um die Hupe zu betätigen, wird die unmittelbar unter der Krafteinleitungsstelle liegende Rückstellfeder 40 einfedern. Die Führung 42 wird an dieser Stelle ebenfalls nach unten längs der Lagerbuchse 42 wandern, wobei die Ausnehmung 50 in der Umschäumung 42 so tief ist, daß die Führung 32 nicht am Grund der Ausnehmung 50 anschlägt. Durch die unsymmetrische seitliche Krafteinleitung kommt es zu einer Schwenkbewegung um eine fiktive Drehachse 60 im Bereich der linken Führung 32. Die Drehachse 60 ist sehr nahe am Rand 28, so daß mit der Verschwenkung der Abdeckkappe 14 nach unten keine wesentliche radiale Verlagerung des Randes 28 auf der rechten Seite verbunden ist, und der Spalt 30 im wesentlichen gleich bleibt. Die geringfügigen radialen Bewegungskomponenten der Führungen 32 werden durch die Umschäumung 12 zugelassen, die eine Kippbewegung der Lagerbuchsen 42 zulassen.

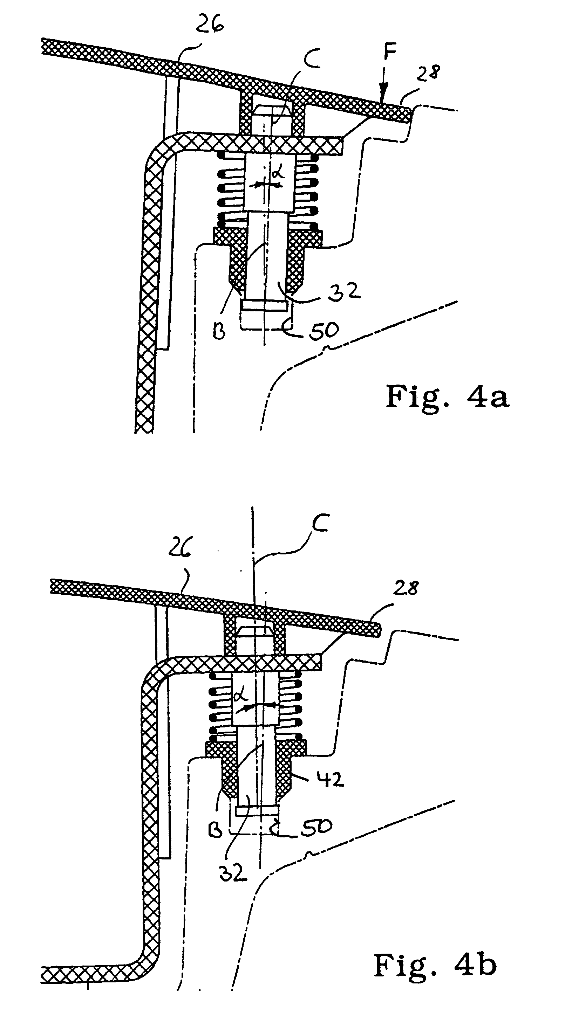

Eine derartige Kippbewegung der in der rechten Hälfte von Figur 2 gezeigten Lagerung ist in Figur 4 gut zu erkennen. In diesem Fall bewirkt eine im Bereich der dargestellten Lagerung aufgebrachte Kraft (siehe auch Pfeil F) ein Verkippen der Führung 32, 42 in der Umschäumung. Figur 4b zeigt ein Verkippen der Lagerung in eine Gegenrichtung; dies wird hervorgerufen durch ein Niederdrücken der Abdeckkappe 14 im Bereich der linken Seite der in Figur 2 gezeigten Lagerung. Die Achse C ist gemäß Figuren 4a und b die der Führung 32 und die Achse B ist die der Öffnung 50.

Die Hupe wird im übrigen betätigt, sobald Hupkontakte 62, 64 in Kontakt getreten sind.

Durch die Ausnutzung der Flexibilität der Umschäumung 12 und die Positionierung der Führungen 32 möglichst weit von der Achse A (Fig.1) entfernt und möglichst nahe am Spalt 30 wird die Führung des Gassackmoduls 14 mit wenigen Teilen unter exakter Einhaltung von Toleranzen ermöglicht. Durch die Nachgiebigkeit der Umschäumung 12 wird auch die Reibung zwischen den Rückstellfedern und ihren Auflagen, die durch eine seitliche Relativbewegung dieser Teile zueinander im Stand der Technik auftritt, vermieden. Die gesamte Einheit aus Aufnahmegehäuse 16, Führungen 32 und Lagerbuchsen 42 samt Rückstellfedern 40 richtet sich bei Aufbringen einer Kraft zur Hupenbetätigung in Richtung der Kraft aus.

## Patentansprüche

1. Fahrzeuglenkrad, mit
einem umschäumten Skelett (10) und
einer zur Hupenbetätigung axial verschiebbar gelagerten Abdeckkappe (26), an welche sich randseitig die Umschäumung (12) des Skeletts (10) anschließt und die ein Aufnahmegehäuse (16) schließt,
und im Bereich eines Randes (28) der Abdeckkappe (26) vorgesehenen Führungen (32) für die Abdeckkappe (26),
**dadurch gekennzeichnet,**
**daß** die Führungen (32) mit dem Aufnahmegehäuse (16) verbunden und gemeinsam mit dem Aufnahmegehäuse (16) relativ zu der Umschäumung (12) beweglich sind, und daß die Führungen (32) in der Umschäumung (12) so gelagert sind, daß sie beim seitlichen, einseitigen Niederdrücken der Abdeckkappe (26) zur Hupenbetätigung durch ein Nachgeben der Umschäumung (12) kippen.

2. Fahrzeuglenkrad nach Anspruch 1, **gekennzeichnet durch** ein von der Abdeckkappe (26) verschlossenes Gassackmodul (14), das zusammen mit der Abdeckkappe (26) axial verschieblich gelagert ist, wobei die Führungen (32) mit dem Gassackmodul (14) verbunden sind.

3. Fahrzeuglenkrad nach Anspruch 2, **dadurch gekennzeichnet, daß** das Gassackmodul ein zur Abdeckkappe (26) offenes topfförmiges Aufnahmegehäuse (16) zur Aufnahme eines Gassacks (18) aufweist, dessen Rand (24) seitlich nach außen zum Rand (28) der Abdeckkappe (26) ragende Fortsätze (36) hat, an denen die Führungen (32) angreifen.

4. Fahrzeuglenkrad nach Anspruch 3, **dadurch gekennzeichnet, daß** die Führungen (32) einstückig an dem Aufnahmegehäuse (16) angeformte Bolzen sind.

5. Fahrzeuglenkrad nach Anspruch 3 oder 4, **dadurch gekennzeichnet, daß** das Aufnahmegehäuse (16) samt Führungen (32) aus Kunststoff ist.

6. Fahrzeuglenkrad nach einem der Ansprüche 2 bis 5, **dadurch gekennzeichnet, daß** eine Rastverbindung zwischen Skelett (10) und Gassackmodul (14) zur Halterung des Gassackmoduls (14) vorgesehen ist.

7. Fahrzeuglenkrad nach einem der vorhergehenden Ansprüche, **dadurch gekennzeichnet, daß** die Führungen (32) Bolzen sind, die sich durch Rückstellfedern (41) erstrecken.

8. Fahrzeuglenkrad nach einem der vorhergehenden Ansprüche, **dadurch gekennzeichnet, daß** die Führungen (32) in Lagerbuchsen (42) aufgenommene Bolzen sind, wobei die Lagerbuchsen (42) axial nicht abziehbar an den Boizen gelagert und in die Umschäumung (12) eingedrückt sind.

9. Fahrzeuglenkrad nach einem der vorhergehenden Ansprüche, **dadurch gekennzeichnet, daß** die Führungen (32) ohne seitliches Spiel in der Abdeckkappe (26) aufgenommen sind.

10. Fahrzeuglenkrad nach einem der vorhergehenden Ansprüche, **dadurch gekennzeichnet, daß** die Abdeckkappe (26) das gesamte Modul vorderseitig abdeckt.

11. Fahrzeuglenkrad nach einem der vorhergehenden Ansprüche, **dadurch gekennzeichnet, daß** die Führungen (32) nicht unmittelbar miteinander verbunden sind.

## Claims

1. A vehicle steering wheel, comprising
a skeleton (10) encased in foam and
a covering cap (26) which is axially displaceably mounted for actuation of the horn and is adjoined on the rim side by the foam casing (12) of the skeleton (10), the covering cap (26) closing a receiving housing (16),
and guides (32) for the covering cap (26), the guides (32) being provided in the area of a rim (28) of the covering cap (26),
**characterized in that**
the guides (32) are connected with the receiving housing (16) and are movable together with the receiving housing (16) relative to the foam casing (12), and that the guides (32) are mounted in the foam casing (12) such that when the covering cap (26) is depressed on the side and unilaterally for actuation of the horn, they are tilted caused by a yielding of the foam casing (12).

2. The vehicle steering wheel according to Claim 1, **characterized by** a gas bag module (14) which is closed by the covering cap (26) and which together with the covering cap (26) is axially displaceably mounted, the guides (32) being connected with the gas bag module (14).

3. The vehicle steering wheel according to Claim 2, **characterized in that** the gas bag module has a cup-shaped receiving housing (16) which is open towards the covering cap (26) and adapted to receive a gas bag (18) and the rim (24) of which has extensions (36) projecting laterally outwards to the rim (28) of the covering cap (26), the guides (32) engaging the extensions (36).

4. The vehicle steering wheel according to Claim 3, **characterized in that** the guides (32) are pins formed integrally with the receiving housing (16).

5. The vehicle steering wheel according to Claim 3 or 4, **characterized in that** the receiving housing (16) together with the guides (32) is made of plastic.

6. The vehicle steering wheel according to any of Claims 2 to 5, **characterized in that** a detent connection is provided between the skeleton (10) and the gas bag module (14) to support the gas bag module (14).

7. The vehicle steering wheel according to any of the preceding claims, **characterized in that** the guides (32) are pins which extend through restoring springs (41).

8. The vehicle steering wheel according to any of the preceding claims, **characterized in that** the guides (32) are pins received in bearing bushes (42), the bearing bushes (42) being mounted on the pins so as to be non-removable in the axial direction and being pressed into the foam casing (12).

9. The vehicle steering wheel according to any of the preceding claims, **characterized in that** the guides (32) are received in the covering cap (26) without lateral clearance.

10. The vehicle steering wheel according to any of the preceding claims, **characterized in that** the covering cap (26) covers the entire module on the front side.

11. The vehicle steering wheel according to any of the preceding claims, **characterized in that** the guides (32) are not directly connected with each other.

## Revendications

1. Volant de direction de véhicule, comportant
un squelette (10) entouré de mousse et
un capuchon (26) monté à déplacement axial pour actionner le klaxon, sur le côté bord duquel se raccorde l'entourage en mousse (12) du squelette (10) et qui ferme un boîtier de réception (16),
et des guidages (32) pour le capuchon (26), lesquels sont prévus dans la région d'un bord (28) du capuchon (26),
**caractérisé en ce que**
les guidages (32) sont reliés au boîtier de réception (16) et sont mobiles conjointement avec le boîtier de réception (16) par rapport à l'entourage en mousse, et **en ce que** les guidages (32) sont montés dans l'entourage en mousse (12) de telle sorte que lorsqu'on enfonce latéralement d'un côté le capuchon (26) pour actionner le klaxon, ils basculent par un affaissement de l'entourage en mousse.

2. Volant de direction de véhicule selon la revendication 1, **caractérisé par** un module de coussin à gaz (14) fermé par le capuchon (26), lequel est monté à déplacement axial conjointement avec le capuchon (26), les guidages (32) étant reliés au module de coussin à gaz (14).

3. Volant de direction de véhicule selon la revendication 2, **caractérisé en ce que** le module de coussin à gaz présente un boîtier de réception (16) en forme de pot, ouvert vers le capuchon (26), dont le bord (24) possède latéralement des prolongements (36) faisant saillie latéralement vers l'extérieur, vers le bord (28) du capuchon (26), et sur lesquels s'engagent les guidages (32).

4. Volant de direction de véhicule selon la revendication 3, **caractérisé en ce que** les guidages sont des boulons façonnés d'un seul tenant sur le boîtier de réception (16).

5. Volant de direction de véhicule selon la revendication 3 ou 4, **caractérisé en ce que** le boîtier de réception (16) avec les guidages (32) est en matière plastique.

6. Volant de direction de véhicule selon l'une des revendications 2 à 7, **caractérisé en ce qu'**il est prévu une liaison par enclenchement entre le squelette (10) et le module de coussin à gaz (14) pour maintenir le module de coussin à gaz (14).

7. Volant de direction de véhicule selon l'une des revendications précédentes, **caractérisé en ce que** les guidages (32) sont des boulons qui s'étendent à travers des ressorts de rappel (41).

8. Volant de direction de véhicule selon l'une des revendications précédentes, **caractérisé en ce que** les guidages (32) sont des boulons reçus dans des coussinets (42), les coussinets étant montés sur les boulons de manière à ne pas pouvoir être retirés axialement et étant pressés dans l'entourage en mousse (12).

9. Volant de direction de véhicule selon l'une des revendications précédentes, **caractérisé en ce que** les guidages (32) sont reçus dans le capuchon (26) sans jeu latéral.

10. Volant de direction de véhicule selon l'une des revendications précédentes, **caractérisé en ce que** le capuchon (26) recouvre le module tout entier sur la face frontale.

11. Volant de direction de véhicule selon l'une des revendications précédentes, **caractérisé en ce que** les guidages (32) ne sont pas reliés directement l'un à l'autre.
